# EUROPÄISCHE PATENTSCHRIFT

(11) **EP 2 483 340 B1**
(45) Veröffentlichungstag und Bekanntmachung des Hinweises auf die Patenterteilung: **17.12.2014**
(21) Anmeldenummer: 10763121.0
(22) Anmeldetag: 17.09.2010
(51) Int. Cl.: C08K 5/00, C08L 69/00, C08K 5/3475, C08K 5/50

(54) **UV-STABILE POLYCARBONAT-ZUSAMMENSETZUNG MIT VERBESSERTEN EIGENSCHAFTEN**
UV-STABLE POLYCARBONATE COMPOSITIONS WITH IMPROVED PROPERTIES
COMPOSITIONS DE POLYCARBONAT STABILES AUX RAYONS UV AVEC DES PROPRIETÉS AMELIORÉES.

(30) Priorität: 30.09.2009 DE 102009043511
(43) Veröffentlichungstag der Anmeldung: 08.08.2012
(73) Patentinhaber: Bayer Intellectual Property GmbH, 40789 Monheim (DE)
(72) Erfinder: KONRAD, Stephan, 41541 Dormagen (DE); HEUER, Helmut-Werner, 51371 Leverkusen (DE); KÖHLER, Karl-Heinz, 52078 Aachen-Brand (DE); WEHRMANN, Rolf, 47800 Krefeld (DE); KOCH, Daniel, 200021 Shanghai (CN); BUTS, Marc, 2570 Duffel (BE); GULDENTOPS, Frank, 200127 Shanghai (CN)
(74) Vertreter: BIP Patents
(86) Internationale Anmeldenummer: PCT/EP2010/005726
(87) Internationale Veröffentlichungsnummer: WO 2011/038843

(56) Entgegenhaltungen:
- EP-A1- 1 762 591
- WO-A1-2009/106246
- WO-A2-02/085613
- DE-A1- 10 028 412
- DE-A1- 10 122 495
- DE-A1- 19 925 125

## Beschreibung

Die Erfindung betrifft UV-stabilisierte Schmelzepolycarbonat-Zusammensetzungen mit verbesserter Schmelzefließfähigkeit bei gleichzeitig guten optischen Eigenschaften und gleichzeitig guter Hydrolysestabilität, die zusätzlich Thermostabilisatoren und ggf. auch aliphatische Fettsäureester enthalten.

Die Herstellung von Polycarbonat-Spritzgussteilen erfordert insbesondere bei dünnwandigen Formteilen eine ausreichend hohe Schmelzefließfähigkeit für einen einwandfreien Ablauf des Spritzgießvorgangs. Solche Formteile sind je nach Einsatzgebiet den unterschiedlichsten Umgebungsbedingungen ausgesetzt und müssen dabei eine Vielzahl von Anforderungen einwandfrei erfüllen. Das bedeutet, dass neben den Verarbeitungseigenschaften insbesondere die klassischen guten optischen Eigenschaften des Polycarbonats bei gleichzeitiger Stabilität gegenüber UV-Strahlung gewährleistet sein müssen. Darüber hinaus dürfen sich diese guten Eigenschaften unter dem relativ häufig auftretenden Einfluss von Feuchtigkeit auch bei höherer Temperatur nicht verändern.

Polycarbonat, das nach dem sogenannten Schmelzumesterungsverfahren, auch Schmelzeverfahren genannt, aus organischen Carbonaten, wie z.B. Diarylcarbonaten, und Bisphenolen ohne Verwendung zusätzlicher Lösungsmittel in der Schmelze hergestellt wird, gewinnt zunehmend an wirtschaftlicher Bedeutung und ist daher für viele Einsatzgebiete ein geeignetes Material. Ein besonderer Vorteil der Schmelze-Polycarbonate liegt darin, daß aufgrund des lösungsmittelfreien Herstellungsverfahrens der Anteil volatiler Verbindungen von vornherein minimiert wird.

Die Herstellung aromatischer Polycarbonate nach dem Schmelzumesterungsverfahren ist bekannt und beispielsweise beschrieben in Schnell, "Chemistry and Physics of Polycarbonates", Polymer Reviews, Vol. 9, Interscience Publishers, New York, London, Sydney 1964, in D.C. Prevorsek, B.T. Debona and Y. Kersten, Corporate Research Center, Allied Chemical Corporation, Morristown, New Jersey 07960, "Synthesis of Poly(ester)carbonate Copolymers" in Journal of Polymer Science, Polymer Chemistry Edition, Vol. 18, 75-90 (1980), in D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich in Des. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299.

Schmelzepolycarbonate, die übliche Additive enthalten, und die sich hinsichtlich des OH-Endgruppengehaltes und hinsichtlich der Fehlstrukturen in der Polycarbonat-Polymerkette von Polycarbonaten unterscheiden, die mit Phosgen in Lösung hergestellt wurden, sind z.B. in der US-2005-0261460 A1 beschrieben. Dort wird ein Verfahren zur Katalyse der Schmelzumesterungsreaktion zur Herstellung von Schmelzepolycarbonat mit möglichst wenigen Fehlstrukturen, wie sie z.B. durch Fries-Umlagerung entstehen, und mit möglichst geringem OH-Endgruppengehalt offenbart. Es fehlen aber Angaben darüber, wie sich die Mischungen solcher Schmelzepolycarbonate mit den dort angegebenen Polymeradditiven, wie z.B. UV-Absorbern, Thermostabilisatoren und Entformungshilfsmitteln, hinsichtlich der Eigenschaftskombinationen von Verarbeitbarkeit, Hydrolyse-Beständigkeit und optischer Qualität verhalten. Es gibt auch keine Hinweise auf bevorzugte Kombinationen der genannten Polymer-Additive.

In der JP-2003-119369 werden Polymermischungen von Schmelzepolycarbonaten mit UV-Absorbern und Phosphiten als Thermostabilisatoren offenbart. Diese Polymermischungen, deren Schmelzepolycarbonate eine Vielzahl verschiedener Fehlstrukturen, insbesondere Verzweigungen, in der Polymerkette enthalten können, weisen eine verbesserte Witterungs-Beständigkeit, verbesserte optische Eigenschaften und verbesserte Verarbeitungseigenschaften hinsichtlich Blasverformung und Extrusionsverhalten auf. Das Anforderungsprofil für diese Art von Verarbeitung unterscheidet sich allerdings von den Anforderungen bei der Spritzgußverarbeitung hinsichtlich der Fließfähigkeit der Polymerschmelze. Die Schmelzfließfähigkeit für Blasverformung oder für Extrusion von Polymerschmelzen wird durch verzweigte Polymere typischerweise sehr leicht erreicht, ist aber meist ungeeignet für die Spritzgußverarbeitung, die eine höhere Schmelzefließfägikeit der Polymermischung bei gleichzeitig hinreichender Festigkeit erfordert. Hinweise dazu sind dieser Anmeldung nicht zu entnehmen. Es werden auch keine weiteren Additive zur Lösung eines solchen Problems offenbart.

In der JP-2001-089653 werden Polymermischungen von Schmelzepolycarbonaten mit UV-Stabilisatoren, Phosphor-Oxyd-Verbindungen und Entformungsmitteln offenbart, die eine verbesserte Thermostabilität, gute Transparenz und gute Hydrolyse- bzw. Witterungs-Beständigkeit aufweisen. Es gibt keine Hinweise auf die Rheologie der Polymerschmelzen bzw. auf die Verarbeitbarkeit im Spritzgußverfahren.

Ebenso werden in der JP-2004-352829 Polymermischungen von ggf. Schmelzepplycarbonaten mit UV-Absorbern, Phosphiten und Paraffinen oder Fettsäureestern offenbart, die neben der guten UV-Beständigkeit eine verbesserte Hydrolyse- bzw. Witterungsbeständigkeit, gute Temperaturbeständigkeit und gute Farbstabilität aufweisen. Auch hier ist nicht erkennbar, ob und in welcher Weise die Schmelzefließfähigkeit bei der Verarbeitung im Spritzgußverfahren günstig beeinflusst wird.

Im bekannten Stand der Technik wird somit kein Hinweis darauf gegebeben, wie die Hydrolysestabilität, die Schmelzefließfähigkeit bei der Spritzgußverarbeitung und gleichzeitig die optischen Eigenschaften bei UV-geschützten Schmelzepolycarbonaten zu verbessern sind.

Es war daher Aufgabe der Erfindung, UV-geschützte Schmelzepolycarbonat-Compounds bereitzustellen, die eine gute Hydrolysestabilität bei gleichzeitig guter Schmelzefließfähigkeit und bei gleichzeitig guten optischen Eigenschaften aufweisen.

Überraschenderweise wurde nun gefunden, dass Schmelzepolycarbonate, die eine erfindungsgemäße Kombination von UV-Absorber mit bestimmten organischen Phosphinen und optionalen aliphatischen Carbonsäureestern enthalten, eine verbesserte Schmelzefließfähigkeit, UV-Stabilität und gute optische Eigenschaften aufweisen.

Die oben genannten Nachteile des Standes der Technik werden durch die erfindungsgemäßen Schmelzepolycarbonat-Formmassen gelöst, die als UV-Stabilisatoren p-Phenylen-bis(methylenmalonsäure)tetraethylester oder 1,3-Bis[(2-cyano-3,3-diphenylacryloyl)oxy]-2,2-bis[[(2-cyano-3,3-diphenylacryloyl)oxy]methyl]propan enthalten und die als PhosphorVerbindungen eine Mischung aus Phosphinen und optional Alkylphosphaten enthalten.

Die in den Formmassen optional zusätzlich enthaltenen aliphatischen Carbonsäureester sind Ester aliphatischer C₆ - C₃₂ Carbonsäuren mit ein- oder mehrwertigen aliphatischen und/oder aromatischen Hydroxyverbindungen. Diese erfindungsgemäßen Formmassen zeichnen sich bei guter UV-Stabilität durch eine verbesserte Schmelzefließfähigkeit in der Spritzgußverarbeitung bei gleichzeitig guten optischen Eigenschaften, insbesondere der Eigenfarbe nach der Spritzgußverarbeitung, und guter Hydrolysestabilität aus.

Die erfindungsgemäßen Zusammensetzungen enthaltend Schmelzepolycarbonate mit den erfindungsgemäßen Phosphinen zeigten überraschenderweise eine Verbesserung der genannten Eigenschaftskombination aus Hydrolysestabilität, Schmelzefließfähigkeit und optischen Eigenschaften, während Zusammensetzungen aus Vergleichsversuchen mit den im Stand der Technik überlicherweise verwendeten Phosphiten in ihren Eigenschaften deutlich hinter den erfindungsgemäßen Zusammensetzungen zurückblieben, wobei mindestens eine der drei Eigenschaften deutlich schlechter war, wie sich aus dem Vergleich der erfindungsgemäßen Beispiele mit den Vergleichsbeispielen der Tabellen 1 bis 4 ergibt.

Gegenstand der Erfindung ist daher eine Polycarbonat-Zusammensetzung aus einem Schmelzepolycarbonat, hergestellt aus Kohlensäurediarylester und Bisphenolen in der Schmelze, das neben des genannten UV-Absorbern zusätzlich Phosphine und optional Alkylphosphate und/oder aliphatische Carbonsäureester enthält.

Erfindungsgemäß verwendete Phosphine sind Verbindungen der allgemeinen Formel (I): 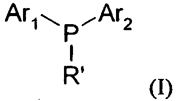
wobei Ar₁ und Ar₂ gleiche oder unterschiedliche unsubstituierte oder substituierte Arylreste sind und
R' ein unsubstituierter oder substituierter Arylrest oder einer der folgenden Reste (1a) bis (Ih) ist 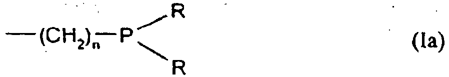 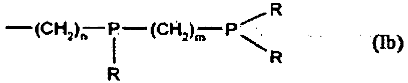 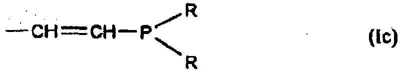 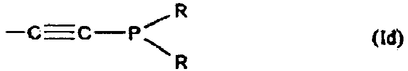 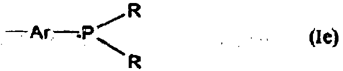 mit Ar = R
   (C₆-C₁₄-Aryl-Rest) 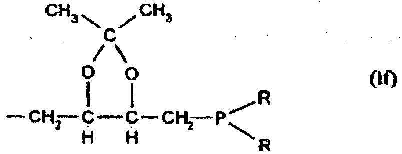 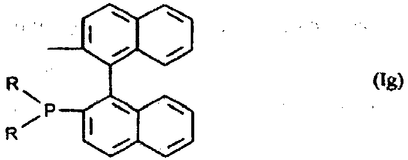 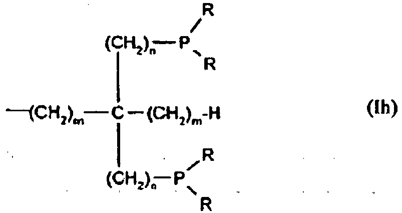 in denen R ein unsubstituierter oder substituierter C₆-C₁₄-Aryl-Rest ist und, n und m jeweils unabhängig voneinander eine ganze Zahl von 1 bis 7 sind und wobei die H-Atome der Reste (Ia) bis (Ic) noch durch Substituenten ersetzt sein können und wobei
   R' noch 4-Phenyl-phenyl oder a-Naphthyl sein kann, wenn beide Ar's in Formel (I) jeweils ebenfalls 4-Phenyl-phenyl oder α -Naphthyl sind. Hierbei können die 4-Phenyl-phenyl- und die α-Naphthyl-Reste noch Substituenten tragen.

Bevorzugte Reste Ar in (1) sind Phenyl, 4-Phenyl-phenyl und Naphthyl.

Geeignete Substituenten der Arylreste Ar in (1) sind F, CH3, CI, Br, J, OCH3, CN, OH, Alkylcarboxy, Phenyl, Cycloalkyl, Alkyl.

Geeignete Substituenten für die H-Atome der Reste (Ia) bis (Ic) sind F, CH3, Alkyl, Cycloalkyl, Cl, Aryl.

Bevorzugte Zahlen "n" und "m" sind 1, 2, 3 oder 4.

Aryl steht jeweils unabhängig für einen aromatischen Rest mit 4 bis 24 Gerüstkohlenstoffatomen, in denen keines, ein, zwei oder drei Gerüstkohlenstoffatome pro Zyklus (aromatischer Ring aus C-Atomen), im gesamten Molekül mindestens jedoch ein Gerüstkohlenstoffatom, durch Heteroatome, ausgewählt aus der Gruppe Stickstoff, Schwefel oder Sauerstoff, substituiert sein können. Vorzugsweise bedeutet Aryl jedoch einen carbozyklischen aromatischen Rest mit 6 bis 24 Gerüstkohlenstoffatomen. Gleiches gilt für den aromatischen Teil eines Arylalkyl-Restes sowie für Arylbestandteile komplexerer Gruppen, (wie z.B. Aryl-carbonyl- oder Aryl-sulfonyl-Resten.)

Beispiele für C₆-C₂₄-Aryl sind Phenyl, o-, p-, m-Tolyl, Naphthyl, Phenanthrenyl, Anthracenyl oder Fluorenyl, Beispiele für heteroaromatisches C₄-C₂₄-Aryl in denen keines, ein, zwei oder drei Gerüstkohlenstoffatome pro Zyklus, im gesamten Molekül mindestens jedoch ein Gerüstkohlenstoffatom, durch Heteroatome, ausgewählt aus der Gruppe Stickstoff, Schwefel oder Sauerstoff, substituiert sein können, sind beispielsweise Pyridyl, Pyridyl-N-Oxid, Pyrimidyl, Pyridazinyl, Pyrazinyl, Thienyl, Furyl, Pyrrolyl, Pyrazolyl, Imidazolyl, Thiazolyl, Oxazolyl oder Isoxazolyl, Indolizinyl, Indolyl, Benzo[b]thienyl, Benzo[b]furyl, Indazolyl, Chinolyl, Isochinolyl, Naphthyridinyl, Chinazolinyl, Benzofuranyl oder Dibenzofuranyl.

Erfindungsgemäß geeignete Triarylphosphine sind z.B. Triphenylphosphin, Tritolylphosphin, Tri-p-tert.-butylphenylphosphin oder deren Oxide. Bevorzugt wird als Triarylphosphin Triphenylphosphin eingesetzt.

Beispiele für die erfindungsgemäß einzusetzenden Diarylphosphine sind 1,2-Bis-(di-pentafluorphenyl-phosphino)-ethan,
Bis-(diphenyl-phosphino)-acetylen,
1 ,2-Bis-(diphenylphosphino)-benzol, 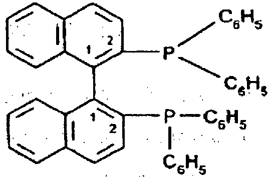
[2,2'-Bis-(diphenylphosphino)- 1,1 '-binaphthyl],
2,3-Bis-(diphenylphosphino)-butan,
1,4-Bis-(diphenylphosphino)-butan,
1 ,2-Bis-(diphenylphosphino)-ethan,
cis- 1 ,2-Bis-(diphenylphosphino)-ethylen. 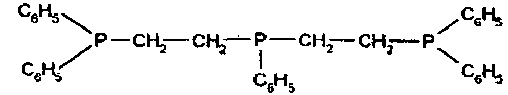
[Bis-(2-(diphenylphosphino)-ethyl)-phenylphosphin], Bis-(diphenylphosphino)-methan, 2,4-Bis-(diphenylphosphino)-pentan, 1 ,3-Bis-(diphenylphosphino)-propan,
1 ,2-Bis-(diphenylphosphino)-propan, 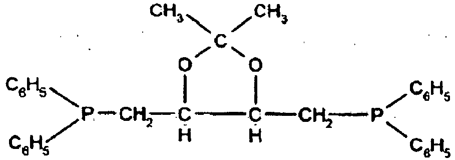
[4,5-O-Isopropyliden-2,3-dihydroxy-1,4-bis-(diphenylphosphino)-butan], Tri-(4-diphenyl)-phosphin und
Tris-(α-naphthyl)-phosphin.

Die Diarylphosphine können nach den folgenden Literaturhinweisen hergestellt werden:
Issleib et al., Chem. Ber., 92(1959), 3175, 3179 und Hartmann et al., Zeitschr. Anorg. Ch. 287(1956) 261, 264.

Es können auch Mischungen aus verschiedenen Phosphinen verwendet werden. Die verwendeten Phosphine werden in Mengen von 10 bis 2000 mg/kg, bevorzugt von 50 bis 800 mg/kg, besonders bevorzugt von 100 bis 500 mg/kg, bezogen auf das Gesamtgewicht der Zusammensetzung, eingesetzt.

Die erfindungsgemäßen Formmassen können neben den eingesetzten Phosphinen auch die entsprechenden Phosphinoxide enthalten.

Erfindungsgemäß können als organische UV-Absorber eingesetzt werden
- das Diarylcyanoacrylat der Formel (XVI) mit R₁ bis R₄₀ = H: 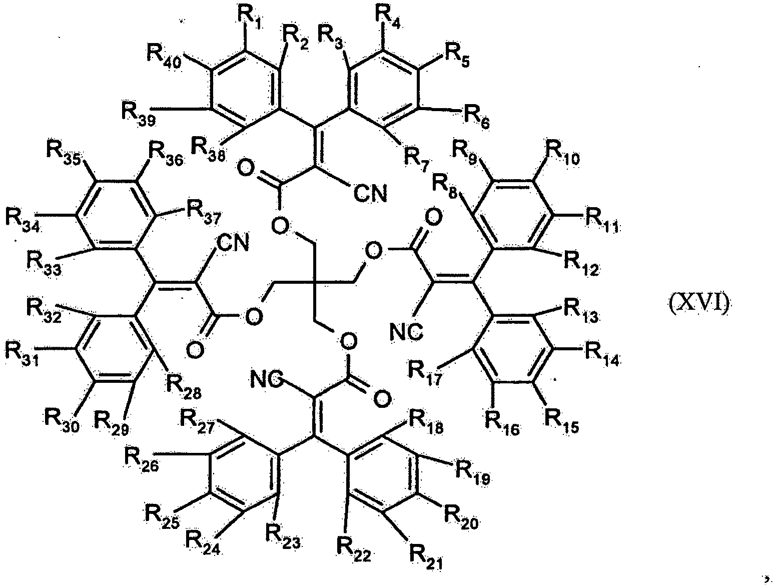 Uvinul® 3030;
- der Malonester der Formel (XVII) mit R = Ethyl:

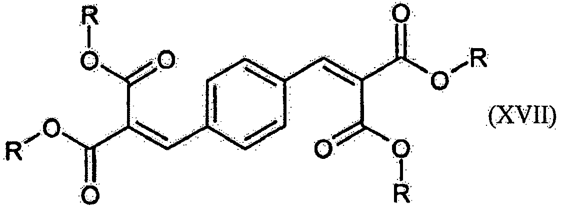

Die UV-Stabilisatoren werden eingesetzt in Mengen von 0,01 Gew.-% bis 15 Gew.-% bezogen auf die Formmasse, bevorzugt im Mengen von 0,05 Gew.-% bis 1 Gew.-%, besonders bevorzugt in Mengen von 0,1 Gew.-% bis 0,4 Gew.-% bezogen auf die Formmasse.

Die Einarbeitung solcher UV-Absorber in die zu verwendenden, erfindungsgemäßen Zusammensetzungen erfolgt nach üblichen Methoden, beispielsweise durch direktes Vermischen der UV-Absorber in fester oder flüssiger Form mit der Schmelze der Formmassen in bekannten Mischaggregaten, wie z.B. Extrudern oder Knetern, gegebenenfalls zusätzlich in Kombination mit statischen Mischern. Die Vermischung kann vorzugsweise auch durch eine Vordispergierung der UV-Absorber in einem Polymerschmelzestrom z.B. in mit einander verbunden Mischaggregaten aus z.B. einem Seitenextruder in Kombination mit einer Schmelzeaustragsvorrichtung durchgeführt werden. Die Vordispergierung der UV-Absorber kann z.B. auch durch getrennte Herstellung eines Masterbatches von bis zu 15 Gew.% an UV-Absorber in einem Schmelzepolycarbonat erfolgen. Ein solches Masterbatch kann der Schmelze der Formmassen entweder direkt oder über ein Mischaggregat zugesetzt werden.

Das erfindungsgemäß einzusetzende Polycarbonat wird durch die Schmelzumesterungsreaktion geeigneter Bisphenole und Kohlensäurediarylester in Gegenwart eines geeigneten Katalysators hergestellt. Das Polycarbonat kann auch durch die Kondensation von Carbonatoligomeren, die Hydroxy- und/oder Carbonatendgruppen enthalten, und geeigneten Kohlensäurediarylestern und Bisphenolen hergestellt werden. Das erfindungsgemäß einzusetzende Polycarbonat kann auch nach einem Zweistufen-Verfahren durch Herstellung von Carbonatoligomeren in der oben genannten Schmelzumesterungsreaktion und durch anschließende Polykondensation dieser Carbonatoligomeren in fester feinteiliger Phase bei erhöhter Temperatur im Vakuum oder unter Durchleiten von heißen Inertgasen hergestellt werden.

Bevorzugte Carbonatoligomere werden durch die Formel (IV) mit Molekulargewichten von 153 bis 15.000 [g/mol] beschrieben. 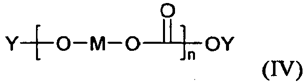 Wobei Y = H oder ein unsubstituierter oder substituierter Arylrest ist und n und M hier unter definiert werden.

Geeignete Kohlensäurediarylester im Zusammenhang mit der Erfindung sind Di-C₆- bis Di-C₁₄-arylester, vorzugsweise die Diester von Phenol oder von alkyl- oder aryl-substituierten Phenolen, d.h. Diphenylcarbonat, Dikresylcarbonat und Di-4-tert-butylphenylcarbonat. Am meisten bevorzugt ist Diphenylcarbonat.

Zu den geeigneten Di-C₆ bis Di-C₁₄-arylestern gehören auch unsymmetrische Diarylester, die zwei verschiedene Arylsubstituenten enthalten. Bevorzugt sind Phenylkresylcarbonat und 4-tert-Butylphenylphenylcarbonat.

Zu den geeigneten Diarylestern gehören auch Gemische von mehr als einem Di-C₆ - C₁₄-arylester. Bevorzugte Gemische sind Gemische von Diphenylcarbonat, Dikresylcarbonat und Di-4-tert-butylphenylcarbonat.

Bezogen auf 1 Mol Diphenol, können die Kohlensäurediarylester in Mengen von 1,00 bis 1,30 Mol, besonders bevorzugt in Mengen von 1,02 bis 1,20 Mol und am meisten bevorzugt in Mengen von 1,05 bis 1,15 Mol verwendet werden.

Geeignete Dihydroxyarylverbindungen im Zusammenhang mit der Erfindung sind solche, die der Formel (V) entsprechen: 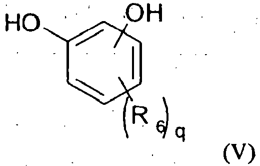 worin
- R₆: ein substituiertes oder unsubstituiertes Phenyl, Methyl, Propyl, Ethyl, Butyl, Cl oder Br ist und q für 0, 1 oder 2 steht.

Bevorzugte Dihydroxybenzolverbindungen sind 1,3-Dihydroxybenzol, 1,4-Dihydroxybenzol und 1,2-Dihydroxybenzol.

Geeignete Dihydroxydiarylverbindungen im Zusammenhang mit der Erfindung sind solche, die der Formel (VI) entsprechen: 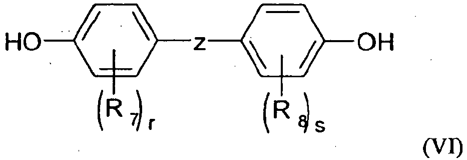 wobei
- Z: C₁ bis C₈-Alkyliden oder C₅ bis C₁₂-Cycloalkyliden, S, SO₂ oder eine Einfachbindung,
- R₇, R₈: unabhängig voneinander ein substituiertes oder unsubstituiertes Phenyl, Methyl, Propyl, Ethyl, Butyl, Cl oder Br ist und
- r, s: unabhängig voneinander für 0, 1 oder 2 steht.

Bevorzugte Diphenole sind 4,4'-Dihydroxydiphenyl, 4,4'-Dihydroxydiphenylsulfid, 1,1Bis(4-hydroxphenyl)cyclo-hexan, 1,2-Bis(4-hydroxyphenyl)benzol, 1,3-Bis(4-hydroxyphenyl)benzol, 1,4-Bis(4-hydroxyphenyl)benzol, Bis(4-hydroxyphenyl)methan, 2,2-Bis(4-hydroxyphenyl) propan, 2,4-Bis(4-hydroxyphenyl)-2-methylbutan, 2,2-Bis(3_methyl-4-hydroxy-phenyl)-propan, 2,2-Bis(3-chlor-4-hydroxyphenyl)propan, Bis(3,5-dimethyl-4-hydroxy-phenyl)methan, 2,2-Bis(3,5-dimethyl-4-hydroxyphenyl)propan, Bis(3,5-dimethyl-4-hydroxyphenyl)sulfon, Bis(4hydroxyphenyl)sulfon, 1,2-Bis[2-(4-hydroxyphenyl)isopropyl]benzol, 1,3-Bis[2-(4-hydroxyphenyl)isopropyl]benzol, 1,4-Bis[2(4hydroxyphenyl)isopropyl]benzol, 1,1-Bis(4-hydroxyphenyl)-1-phenylethan, 2,4-Bis(4-hydroxyphenyl)-2-methylbutan, 2,2-Bis-(3,5-dichlor-4-hydroxyphenyl)-propan, 2,2-Bis(3,5-dibrom-4-hydroxyphenyl)propan, 1,1-Bis(4-hydroxyphenyl)-3,3,5trimethylcyclohexan.

Die am meisten bevorzugten Diphenole sind 1,1-Bis(4-hydroxyphenyl)-1-phenylethan, 2,2-Bis(4-hydroxyphenyl)propan, 4,4'-Dihydroxydiphenyl, 1,1-Bis(4-hydroxyphenyl)-3,3,5-trimethylcyclohexan, 2,2-Bis(3,5-dibrom-4-hydroxyphenyl)propan und 1,3-Bis[2-(4-hydroxyphenyl)isopropyl]benzol.

Zu den geeigneten Diphenolen gehören auch Gemische von mehr als einem Diphenol; dabei würde ein Copolycarbonat entstehen. Die am meisten bevorzugten Mischpartner sind 1,3-Bis[2-(4-hydroxyphenyl)isopropyl]benzol, 1,1-Bis(4-hydroxyphenyl)-3,3,5-trimethylcyclohexdan, 2,2-Bis(4-hydroxyphenyl)propan, 4,4'-Dihydroxydiphenyl und 2,2-Bis(3,5-dibrom-4-hydroxyphenyl)propan.

Zusätzlich kann ein Verzweigungsmittel hinzugefügt werden, wie z.B. Verbindungen, die drei funktionelle phenolische OH-Gruppen enthalten. Durch die Verzweigung würde das nicht-Newtonsche Fließverhalten erhöht. Zu den geeigneten Verzweigungsmitteln gehören Phloroglucin, 3,3-Bis(3-methyl-4-hydroxyphenyl)-2-oxo-2,3-dihydroindol, 4,6-Dimethyl-2,4,6-tris(4-hydroxyphenyl)hepten-2, 4,6-Dimethyl-2,4,6-tris(4-hydroxyphenyl)-heptan, 1,3,5-Tris-(4-hydroxyphenyl)benzol, 1,1,1-Tris(4-hydroxyphenyl)ethan, Tris(4-hydroxyphenyl)phenylmethan, 2,2-Bis[4,4-bis(4-hydroxyphenyl)cyclohexyl]propan, 2,4-Bis-(4-hydroxyphenylisopropyl)phenol, 2,6-Bis(2-hydroxy-5'-methylbenzyl)-4-methylphenol, 2-(4-hydroxyphenyl)-2-(2,4-dihydroxyphenyl)propan, Hexakis(4-(4-hydroxyphenylisopropyl)phenyl)orthoterephthalat, Tetrakis(4-hydroxyphenyl)methan, Tetrakis(4-(4-hydroxyphenylisopropyl)phenoxy)methan, 1,4-Bis((4',4"-dihydroxytriphenyl)methyl)benzol und Isatinbiskresol, Pentaerythrit, 2,4-Dihydroxybenzoesäure, Trimesinsäure, Cyanursäure.

Zur Herstellung der erfindungsgemäßen Polycarbonate geeignete Katalysatoren sind beispielsweise solche der allgemeinen Formel (VII) 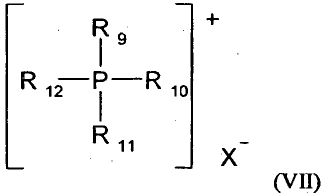 worin
R₉, R₁₀, R₁₁ und R₁₂ unabhängig voneinander die gleichen oder verschiedene C₁- bis C₁₈-Alkylene, C₆ bis C₁₀-Aryle oder C₅ bis C₆-Cycloalkyle bezeichnen können und X⁻ für ein Anion stehen kann, bei dem das entsprechende Säure-Base-Paar H⁺ + X⁻ →. HX ein pK_{b} von < 11 hat.

Bevorzugte Katalysatoren sind Tetraphenylphosphoniumfluorid, Tetraphenylphosphoniumtetraphenylborat und Tetraphenylphosphoniumphenolat. Am meisten bevorzugt ist Tetraphenylphosphoniumphenolat. Bevorzugte Mengen an Phosphoniumsalzkatalysatoren sind beispielsweise 10⁻² bis 10⁻⁸ Mol pro Mol Diphenol und die am meisten bevorzugten Katalysatormengen sind 10⁻⁴ bis 10⁻⁶ Mol pro Mol Diphenol. Es können zudem gegebenenfalls Cokatalysatoren zusätzlich zu dem oder den Phosphoniumsalz(en) verwendet werden, um die Geschwindigkeit der Polymerisation zu erhöhen.

Solche Cokatalysatoren können beispielsweise Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium sein. Am meisten bevorzugt sind Natriumhydroxid- und Natriumphenolat. Die Mengen des Cokatalysators können beispielsweise im Bereich von 1 bis 200 µg/kg, vorzugsweise 5 bis 150 µg/kg und am meisten bevorzugt 10 bis 125 µg/kg jeweils bezogen auf die eingesetzte Masse der Dihydroxydiarylverbindung liegen, jeweils berechnet als Natrium.

Die Polycarbonate können stufenweise hergestellt werden, die Temperaturen können stufenweise im Bereich von 150 bis 400°C durchgeführt werden, die Verweilzeit in jeder Stufe kann 15 Minuten bis 5 Stunden betragen, und die Drücke in jeder Stufe können 1000 bis 0,01 mbar betragen. Besonders bevorzugt nimmt die Temperatur von einer Stufe zur anderen zu und der Druck von einer zur nächsten Stufe ab.

Die bevorzugt verwendeten Schmelzepolycarbonate sind gekennzeichnet durch die allgemeine Formel (IV) 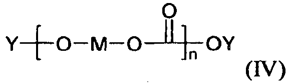 wobei die eckige Klammer sich n wiederholende Struktureinheiten bezeichnet, M für Ar₃ oder eine multifunktionelle Verbindung A, B, C sowie Verbindung D steht, wobei Ar₃ eine Verbindung sein kann, die durch Formel (VIII) oder (IX) dargestellt wird, bevorzugt (IX) 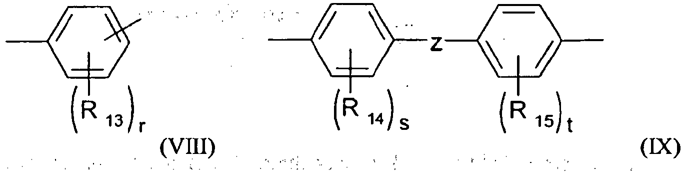 worin
- Z: C₁ bis C₈-Alkyliden oder C₅ bis C₁₂-Cycloalkyliden, S, SO₂ oder eine Einfachbindung ist,
- R₁₃, R₁₄, R₁₅: unabhängig voneinander ein substituiertes oder unsubstituiertes C₁ - C₁₈ Alkylrest ist, bevorzugt ein substituiertes oder unsubstituiertes Phenyl, Methyl, Propyl, Ethyl, Butyl, Cl oder Br ist und
- r, s, t: unabhängig voneinander für 0, 1 oder 2 steht,
n eine natürliche Zahl ist,
wobei die multifunktionelle Verbindung A eine Verbindung der Formel 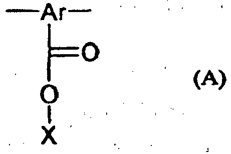 ist, wobei die multifunktionelle Verbindung B eine Verbindung der Formel 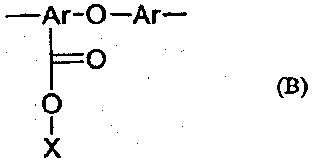 ist, wobei die multifunktionelle Verbindung C eine Verbindung der Formel 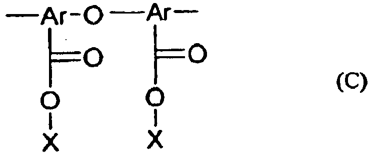 ist, wobei Verbindung D eine Verbindung der Formel 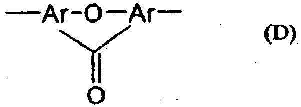 ist, und die Summe von multifunktionellen Verbindungen A, B, C und D ≥ 5 mg/kg ist,
wobei Y = H oder eine Verbindung der Formel (X) 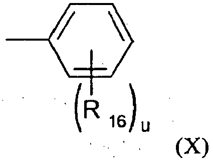 ist, wobei
- R₁₆: gleich oder verschieden H, C₁ bis C₂₀-Alkyl, C₆H₅ oder C(CH₃)₂C₆H₅, und
- u: 0, 1, 2 oder 3 sein kann,
wobei X = Y oder -[MOCOO]ₙ-Y ist, wobei M und Y die oben angegebene Bedeutung haben.

Das erfindungsgemäße eingesetzte Polycarbonat kann ein durch Gelpermeationschromatographie bestimmtes Mittel des Molekulargewichts von 5.000 bis 80.000, vorzugsweise 10.000 bis 60.000 und in am meisten bevorzugter Weise 15.000 bis 40.000 aufweisen.

Vorzugsweise hat Ar die folgende Bedeutung:

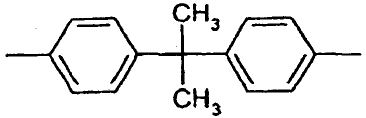

Vorzugsweise ist die multifunktionelle Verbindung A die Verbindung A1:

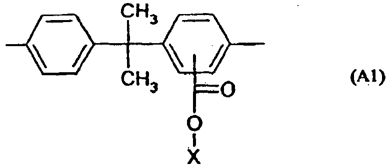

Vorzugsweise ist die Verbindung B die Verbindung B1:

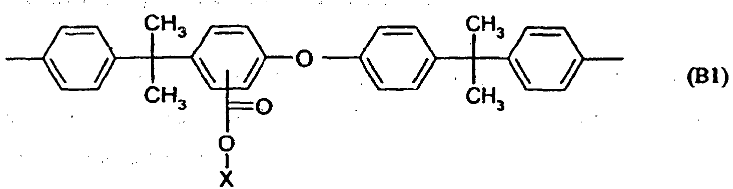

Vorzugsweise ist die multifunktionelle Verbindung C die Verbindung C1:

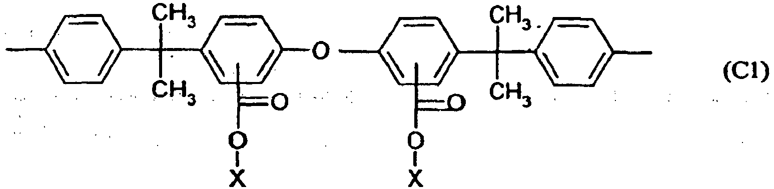

In den Verbindungen A1, B1 und C1 hat X die oben angegebene Bedeutung. Vorzugsweise ist die Verbindung D die Verbindung D1:

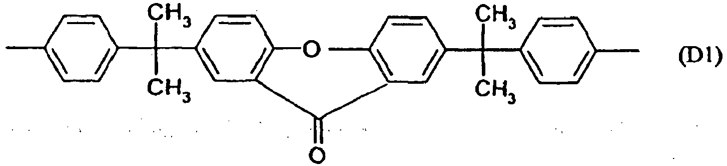

Die zuvor beschriebenen Schmelzepolycarbonate sind nur beispielhaft genannt. Die Anteile der Komponenten A bis D sind in Summe in Mengen ≥ 5 mg/kg im Schmelzepolycarbonat enthalten.

Erfindungsgemäß optional verwendete Alkylphosphate C) sind Verbindungen der allgemeinen Formel (II): 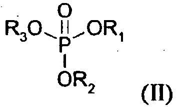 wobei R₁ bis R₃ H, gleiche oder unterschiedliche linerare, verzweigte oder zyklische Alkylreste sein können. Besonders bevorzugt sind C₁-C₁₈ Alkylreste. C₁-C₁₈-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl 1,1,2-Trimethylpropyl, 1,2,2-Trimethylpropyl, 1-Ethyl-1-methylpropyl oder 1-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl.

Erfindungsgemäß geeignete Alkylphosphate sind z.B. Mono-, Di- und Trihexylphosphat, Triisoctylphosphat und Trinonylphosphat. Bevorzugt wird als Alkylphosphat Triisooctylphosphat (Tris - 2-ethyl-hexyl-phosphat) verwendet. Es können auch Mischungen aus verschiedenen Mono-, Di- und Trialkylphosphaten verwendet werden.

Die verwendeten Alkylphosphate werden in Mengen von 0 bis 500 mg/kg, bevorzugt von 0,5 bis 500 mg/kg, besonders bevorzugt 2 bis 500 mg/kg, bezogen auf das Gesamtgewicht der Zusammensetzung eingesetzt.

Erfindungsgemäß optional verwendete aliphatische Carbonsäureester D) sind Ester aliphatischer langkettiger Carbonsäuren mit ein- oder mehrwertigen aliphatischen und/oder aromatischen Hydroxyverbindungen. Besonders bevorzugt verwendete aliphatische Carbonsäureester sind Verbindungen der allgemeinen Formel (III):

(R₄-CO-O)ₒ-R₅-(OH)ₚ mit o = 1 bis 4 und p = 3 bis 0 (III)

wobei R₄ ein aliphatischer gesättigter oder ungesättigter, linearer, cyclischer oder verzweigter Alkylrest ist und R₅ ein Alkylenrest eines 1- bis 4-wertigen aliphatischen Alkohols R₅-(OH)ₒ₊ₚ ist.

Besonders bevorzugt für R₄ sind C₁-C₁₈ Alkylreste. C₁-C₁₈-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-methylbutyl, 1,1,2-Trimethylpropyl, 1,2,2-Trimethylpropyl, 1-Ethyl-1-methylpropyl oder 1-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl.

Alkylen steht für einen geradkettigen, zyklischen, verzweigten oder unverzweigten C₁-C₁₈ AlkylenRest. C₁-C₁₈-Alkylen steht beispielsweise für Methylen, Ethylen, n-Propylen, iso-Propylen, n-Butylen, n-Pentylen, n-Hexylen, n-Heptylen, n-Octylen, n-Nonylen, n-Decylen, n-Dodecylen, n-Tridecylen, n-Tetradecylen, n-Hexadecylen oder n-Octadecylen.

Bei Estern von mehrwertigen Alkoholen können auch freie, nicht veresterte OH-Gruppen vorhanden sein. Erfindungsgemäß geeignete aliphatische Carbonsäureester sind z.B.: Glycerinmonostearat, Palmitylpalmitat, und Stearylstearat. Es können auch Gemische verschiedener Carbonsäureester der Formel (III) eingesetzt werden. Bevorzugt verwendete Carbonsäureester sind Ester von Pentaerythrit, Glycerin, Trimethylolpropan, Propandiol, Stearylalkohol, Cetylalkohol oder Myristylalkohol mit Myristin-, Palmitin-, Stearin- oder Montansäure und Gemische daraus. Besonders bevorzugt sind Pentaerythrit-tetrastearat, Glycerinmonostearat, Stearylstearat und Propandioldistearat, bzw. Gemische daraus.

Die Carbonsäureester werden in Mengen von 0 bis 12000 mg/kg, bevorzugt von 500 bis 10000 mg/kg, besonders bevorzugt von 2000 bis 8000 mg/kg, bezogen auf das Gesamtgewicht der Zusammensetzung eingesetzt.

Die erfindungsgemäßen Zusammensetzungen (Schmelzepolycarbonat-Formmassen) können beispielsweise hergestellt werden, indem man die jeweiligen Bestandteile in bekannter Weise vermischt und bei Temperaturen von 200°C bis 400°C in üblichen Aggregaten wie Innenknetern, Extrudern und Doppelwellenschnecken schmelzcompoundiert und schmelzextrudiert. Die Vermischung der einzelnen Bestandteile kann sowohl sukzessive als auch simultan erfolgen und zwar sowohl bei etwa 20°C (Raumtemperatur) als auch bei höherer Temperatur. Die erfindungsgemäß eingesetzten Verbindungen können aber auch separat in unterschiedlichen Stadien des Herstellprozesses in die Schmelzepolycarbonat-Formmasse eingebracht werden. So können z.B. das Alkylphosphat und / oder das Triarylphosphin bereits während oder am Ende der Polykondensation in das Schmelzepolycarbonat eingebracht werden, bevor aliphatische Carbonsäureester hinzugesetzt werden.

Die Zugabeform der erfindungsgemäßen Verbindungen ist nicht limitiert. Die erfindungsgemäßen Verbindungen bzw. Mischungen der erfindungsgemäßen Verbindungen können als Feststoffe, z.B. als Pulver, in Lösung oder als Schmelze der Polymerschmelze zugesetzt werden. Bevorzugt erfolgt die Dosierung der organischen Phosphorverbindungen und der aliphatischen Carbonsäureester über einen Seitenextruder hinter der letzten Polykondensationsstufe. Im großtechnischen Ausführungsformen wird besonders bevorzugt ein Seitenextruder mit einem Durchsatz von beispielsweise 200 - 1000 kg Polycarbonat pro Stunde betrieben.

Die Zugabe der UV-Absorber erfolgt bevorzugt in flüssiger Form bei einer Temperatur von ca. 80 bis 250°C hinter den Trichter der Polycarbonat-Aufgabe in eine Zone des Seitenextruders, die mit Mischelementen ausgestattet ist. Dabei erfolgt die Entnahme der UV-Absorber aus einer Ringleitung, die bevorzugt auf einen Druck von 2-20 bar bevorzugt bei einer Temperatur von 80 - 250 °C gehalten wird. Die zugesetzte Menge kann über ein Regelventil gesteuert werden. In einer anderen bevorzugten Ausführungsform erfolgt die Zugabe der UV-Absorber als Feststoff in den Trichter der Polycarbonat-Aufgabe des Seitenextruders.

In einer bevorzugten Ausführungsform erfolgt die optionale Dosierung von Alkylphosphaten beispielsweise bei Raumtemperatur in flüssiger Form gemeinsam mit Polycarbonat in den Trichter der Polycarbonat-Aufgabe des Seitenextruders. Die Menge an Alkylphosphat wird z.B. mit Hilfe einer Membranpumpe oder einer anderen geeigneten Pumpe dosiert. Die Zugabe von Triarylphosphinen erfolgt bevorzugt in flüssiger Form bei einer Temperatur von ca. 80 bis 250°C hinter den Trichter der Polycarbonat-Aufgabe in eine Zone des Seitenextruders, die mit Mischelementen ausgestattet ist. Dabei erfolgt die Entnahme der Phosphine aus einer Ringleitung, die bevorzugt auf einen Druck von 2-20 bar bevorzugt bei einer Temperatur von 80 - 250 °C gehalten wird. Die zugesetzte Menge kann über ein Regelventil gesteuert werden.

Besonders bevorzugt kann hinter dem Seitenextruder eine Zahnradpumpe zur Druckerhöhung installiert werden. Die verwendeten Carbonsäureester können bevorzugt hinter dem Seitenextruder und vor den statischen Mischer mit einer Membranpumpe oder einer anderen geeigneten Pumpe zudosiert werden. Die Carbonsäureester werden dann bevorzugt in flüssiger Form besonders bevorzugt bei 80-250°C mit einer Membranpumpe bei erhöhtem Druck, besonders bevorzugt von 50 - 250 bar, hinter die Zahnradpumpe dosiert. Alternativ können die Carbonsäureester auch in die Mischzone des Seitenextruders über ein Regelventil in den Schmelzestrom eingetragen werden.

In einer besonders bevorzugten Ausführungsform befindet sich hinter dem Seitenextruder und allen Additiv-Dosierstellen ein statischer Mischer, um eine gute Durchmischung aller Additive zu gewährleisten. Die Polycarbonat-Schmelze des Seitenextruders wird dann in den Polycarbonat-Hauptschmelzestrom eingetragen. Die Vermischung des Hauptschmeizestroms mit dem Schmelzestrom des Seitenextruders erfolgt über einen weiteren statischen Mischer.

Alternativ zur Flüssigdosierung können die Phosphine und die Carbonsäureester in Form eines Masterbatches (Konzentrat der Additive in Polycarbonat) oder in reiner, fester Form über den Trichter der Polycarbonataufgabe des Seitenextruders dosiert werden. Ein solches Masterbatch kann weitere Additive enthalten.

Alle Additive können auch nachträglich zum Beispiel durch Compoundierung in das Polycarbonat eingebracht werden.

Die erfindungsgemäßen Formmassen können zur Herstellung von Formkörpern jeder Art verwendet werden.

Diese können vorzugsweise durch Spritzguss, aber auch in entsprechender Modifikation durch Extrusion und Blasformverfahren hergestellt werden. Eine weitere Form der Verarbeitung ist die Herstellung von Formkörpern durch Tiefziehen aus zuvor hergestellten Platten oder Folien.

Beispiele der erfindungsgemäßen Formkörper sind Profile, Folien, Gehäuseteile jeder Art, z.B. für Haushaltsgeräte wie Saftpressen, Kaffeemaschinen, Mixer; für Büromaschinen wie Monitore, Drucker, Kopierer; für Platten und deren Coextrusionsschichten, Rohre, Elektroinstallationskanäle, Fenster, Türen und Profile für den Bausektor, Innenausbau und Außenanwendungen; auf dem Gebiet der Elektrotechnik z.B. für Schalter und Stecker. Ferner können die erfindungsgemäßen Formkörper für Innenaus- und Bauteile von Schienenfahrzeugen, Schiffen, Flugzeugen, Bussen und anderen Kraftfahrzeugen sowie für Kfz-Karosserieteile verwendet werden.

Die erfindungsgemäßen Formkörper können transparent, translucent oder opak sein. Weitere Formkörper sind insbesondere optische und magnetooptische Datenspeicher wie Mini Disk, Compact Disk (CD) oder Digital Versatile Disk (DVD), Lebensmittel- und Getränkeverpackungen, optische Linsen und Prismen, Linsen für Beleuchtungszwecke, Autoscheinwerferlinsen, Verglasungen für Bau- und Kraftfahrzeuge, Verscheibungen anderer Art wie für Gewächshäuser, sogenannte Stegdoppelplatten oder Hohlkammerplatten.

### Beispiele

Die erfindungsgemäßen Compounds wurden auf einem Extruder ZE25/3 der Fa. Berstorff, Hannover, mit einem Durchsatz von 10 kg/Std. hergestellt. Die Gehäusetemperaturen betrugen 220 bis 260 °C. Die verschiedenen Additive wurden in Form einer Pulvermischung mit Polycarbonatpulver - 5 Gew.-% bezogen auf die Gesamteinwaage - zudosiert.

### Verwendete Rohstoffe:

**PC 1** ist ein Polycarbonat ohne Additive auf Basis von Bisphenol A und DPC (Diphenylcarbonat) mit einer Schmelze-Volumenfließrate (MVR) von 11,4 cm³/10 min (300°C/1,2 kg). Multifunktionelle Verbindungen A : 370 ppm, B : 11 ppm, C : 35 ppm, D : 67 ppm. Phenolische OH-Gruppen: 297 mg/kg

**PC 2** ist ein Polycarbonat ohne Additive auf Basis von Bisphenol A mit einem MVR von 19 cm³/10 min (300°C/1,2 kg). Multifunktionelle Verbindungen A, B, C und D unterhalb der Nachweisgrenze.
- TPP:: Triphenylphosphin
- PETS:: Pentaerythrittetrastearat
- Loxiol G32:: Stearylstearat
- GMS:: Glycerinmonostearat
- Trialkylphosphit:: Tris[(3-ethyl-3-oxetanyl)methyl] phosphit
- Tinuvin 329:: 2-(2-Hydroxy-5-t-octylphenyl)benzotriazol
- Hostavin B-cap:: p-Phenylen-bis(methylenmalonsäure)tetraethyl ester
- Uvinul 3030:: 1,3-Bis[(2-cyano-3,3-diphenylacryloyl)oxy]-2,2-bis[[(2-cyano-3,3-diphenylacryloyl)oxy]methyl]propan

### Charakterisierung der erfindungsgemäßen Formmassen (Testmethoden):

Schmelzviskosität: Die Bestimmung der rheologischen Eigenschaften geschieht durch die Messung der Schmelzviskosität der erfindungsgemäßen Formmassen in Pa·s bei Temperaturen von 280°C bis 300°C in Abhängigkeit vom Schergefälle (eta), das zwischen 50 und 5000 [l/s] variieren kann. Die Messung erfolgt nach ISO 11443 mit Hilfe eines Kapillarrheometers.

Farbmessung an Formkörpern durch Bestimmung des Yellowness-Index YI: Die Bestimmung der optischen Eigenschaften der erfindungsgemäßen Formmassen geschieht durch Messung des sog. Yellowness-Index (YI) an Normprüfkörpern nach ASTM E313.

Bestimmung der relativen Viskosität (Eta-rel): Die relative Lösungsviskosität eta rel wird bestimmt in Methylenchlorid (0,5 g Polycarbonat/l) bei 25°C in einem Ubbelohde Viskosimeter.

Bestimmung der Hydrolyse-Beständigkeit durch Kochtest: Die Bestimmung der Hydrolysebeständigkeit der erfindungsgemäßen Formmassen geschieht durch einen sog. Kochtest in Wasser, wobei über einen Zeitraum von 100 h Normprüfkörper in reinem Wasser unter Rückfluß bei Normaldruck gelagert werden. Veränderungen der so gelagerten Formkörper werden durch Messung der relativen Lösungsviskosität bestimmt. Der ΔEta rel. Wert nach 50 bzw. 100 h ist die Änderung des Eta rel. Wertes im Vergleich zum Ausgangswert. Ein negatives Vorzeichen bedeutet eine Abnahme des Eta rel. Wertes nach dem Kochtest und damit einen Abbau des Polymeren. Bei einer Abnahme des Eta rel. Wertes von mehr als 0,023 nach 50 bzw. mehr als 0,025 nach 100 h ist der Kochtest nicht bestanden.

Die Bestimmung der Schmelze-Volumenfließrate (MVR) erfolgt bei 300°C und 1,2 kg Belastung mit einem Schmelzindexprüfgerät nach ISO 1133.

Die Tabellen 1 - 4 zeigen die Zusammensetzung der hergestellten Compounds sowie die Schmelzeviskositäten, die YI-Werte am 4 mm Plättchen und die relative Viskosität vor, nach 50 h- und nach 100 h-Kochtest als ein Maß für die Hydrolysebeständigkeit der erfindungsgemäßen Formmassen.

Erfindungsgemäße Beispiele sind die Nr.: 27, 28 und 29.

Beispiel Nr. 1 ist das Referenzbeispiel ohne Additive.

Die anderen Beispiele sind ebenfalls nicht erfindungsgemäß.

Alle erfindungsgemäßen Beispiele zeigen im Vergleich zum Referenzbeispiel 1 eine verbesserte Fließfähigkeit, bestimmt anhand der gemessenen Schmelzviskositäten, und verbesserte optische Eigenschaften, durch den niedrigeren YI-Wert verdeutlicht. Alle erfindungsgemäßen Beispiele zeigen zudem ein gute Hydrolysestabilität belegt durch eine sehr geringe Änderung der relativen Viskosität nach Kochtest.

Die nicht erfindungsgemäßen Beispiele 3, 4, 6, 7, 10, 11, 14, 15, 18, 19, 23 und 26 zeigen im Gegensatz zu den erfindungsgemäßen Beispielen eine Verschlechterung des YI-Wertes im Vergleich zum, nicht additivierten Referenzbeispiel 1.

Die nicht erfindungsgemäßen Beispiele 3, 6, 11, 14, 15, 18, 19, 22 und 26 zeigen zudem eine schlechte Hydrolysestabilität, verdeutlicht durch den signifikanten Abfall der relativen Viskosität nach dem Kochtest. Nach 50 h Kochtest beträgt der ΔEta rel. Wert im Vergleich zum Ausgangswert für diese Probe deutlich mehr als -0,023 und nach 100 h deutlich mehr als -0,025. Für alle erfindungsgemäßen Beispiele beträgt der ΔEta rel. Wert im Vergleich zum Ausgangswert nach 50 h Kochtest deutlich weniger als -0,023 und nach 100 h deutlich weniger als -0,025.

Die Daten der Tabellen 1-4 belegen, dass die erfindungsgemäße Kombination der drei Merkmale: gute Hydrolysestabilität, verbesserte Fließfähigkeit und verbesserte optische Eigenschaften allein durch die erfindungsgemäßen Zusammensetzungen erreicht wird.

**Tabelle 1: Beispiele 1- 14, Schmelzviskositäten von hergestellten Compounds**

| Beispiel-Nr: | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Rezeptur erfindungsgemäß? | | Nein | nein | nein | nein | nein | nein | nein | nein | nein | nein | nein | nein | nein | nein |
| PC1 | % | 95 | 95 | 95 | 95 | 95 | 95 | 95 | 95 | 95 | 95 | 95 | 95 | 95 | 95 |
| PC2 | % | 5,00 | 4,70 | 4,70 | 4,75 | 4,30 | 4,30 | 4,35 | 4,740 | 4,725 | 4,740 | 4,725 | 4,340 | 4,325 | 4,34 |
| PETS | % | - | - | - | - | 0,40 | 0,40 | 0,40 | - | - | - | - | 0,40 | 0,40 | 0,40 |
| TPP | % | - | 0,05 | - | - | 0,05 | - | - | 0,010 | 0,025 | - | - | 0,010 | 0,025 | - |
| Trialkylphosphit | % | - | - | 0,05 | - | - | 0,05 | - | - | - | 0,010 | 0,025 | - | - | 0,01 |
| Tinuvin 329 | % | - | 0,25 | 0,25 | 0,25 | 0,25 | 0,25 | 0,25 | 0,25 | 0,25 | 0,25 | 0,25 | 0,25 | 0,25 | 0,25 |
| Hostavin B-Cap | % | | | | | | | | | | | | | | |
| Uvinul 3030 | % | | | | | | | | | | | | | | |
| GMS | % | | | | | | | | | | | | | | |
| Loxiol G32 | % | | | | | | | | | | | | | | |
| | | | | | | | | | | | | | | | |

| Schmelzeviskosität, 280°C | | | | | | | | | | | | | | | |
|---|---|---|---|---|---|---|---|---|---|---|---|---|---|---|---|
| eta 200 [l/s] | Pas | 703 | 639 | 640 | 649 | 554 | 598 | 556 | 669 | 641 | 651 | 634 | 645 | 618 | 648 |
| eta 500 [l/s] | Pas | 562 | 497 | 523 | 531 | 460 | 492 | 456 | 541 | 485 | 526 | 522 | 521 | 500 | 521 |
| eta 1000 [l/s] | Pas | 428 | 369 | 403 | 407 | 366 | 386 | 359 | 415 | 386 | 405 | 403 | 403 | 385 | 398 |
| eta 1500 [l/s] | Pas | 348 | 320 | 328 | 330 | 304 | 318 | 297 | 337 | 324 | 328 | 329 | 328 | 310 | 323 |

| Schmelzeviskosität, 300°C | | | | | | | | | | | | | | | |
|---|---|---|---|---|---|---|---|---|---|---|---|---|---|---|---|
| eta 200 [l/s] | Pas | 362 | 325 | 317 | 289 | 206 | 333 | 245 | 302 | 332 | 334 | 346 | 335 | 324 | 339 |
| eta 500 [l/s] | Pas | 317 | 283 | 284 | 266 | 186 | 297 | 224 | 274 | 294 | 300 | 306 | 299 | 292 | 300 |
| eta 1000 [l/s] | Pas | 266 | 241 | 242 | 220 | 169 | 253 | 192 | 233 | 250 | 257 | 259 | 254 | 247 | 254 |
| eta 1500 [l/s] | Pas | 230 | 211 | 211 | 195 | 151 | 220 | 174 | 205 | 217 | 222 | 225 | 220 | 214 | 220 |

**Tabelle 2: Beispiele 15- 28, Schmelzviskositäten von hergestellten Compounds**

| Beispiel-Nr: | | 15 | 16 | 17 | 18 | 19 | 20 | 21 | 22 | 23 | 24 | 25 | 26 | 27 | 28 | 29 |
|---|---|---|---|---|---|---|---|---|---|---|---|---|---|---|---|---|
| Rezeptur erfindungsgemäß? | | nein | nein | nein | nein | nein | nein | nein | nein | nein | nein | nein | nein | ja | ja | ja |
| PC1 | % | 95 | 95 | 95 | 95 | 95 | 95 | 95 | 95 | 95 | 95 | 95 | 95 | 95 | 95 | 95 |
| PC2 | % | 4,32 | 4,525 | 3,925 | 4,52 | 3,92 | 4,875 | 4,575 | 4,87 | 4,57 | 4,475 | 4,175 | 4,17 | 4,32 | 4,32 | 4,32 |
| PETS | % | 0,40 | 0,20 | 0,80 | 0,20 | 0,80 | | - | | | 0,40 | 0,40 | 0,40 | | | |
| TPP | % | | 0,025 | 0,025 | | | 0,025 | 0,025 | | | 0,025 | 0,025 | | 0,02 | 0,02 | 0,02 |
| Trialkylphosphit | % | 0,02 | | | 0,02 | 0,02 | | - | 0,02 | 0,02 | | | 0,02 | | | |
| Tinuvin 329 | % | 0,25 | 0,25 | 0,25 | 0,25 | 0,25 | 0,1 | 0,4 | 0,1 | 0,4 | 0,1 | 0,4 | 0,4 | | | |
| Hostavin B-Cap | % | | | | | | | | | | | | | 0,25 | 0,25 | |
| Uvinul 3030 | % | | | | | | | | | | | | | | | 0,25 |
| GMS | % | | | | | | | | | | | | | 0,4 | | 0,4 |
| Loxiol G32 | % | | | | | | | | | | | | | | 0,4 | |
| | | | | | | | | | | | | | | | | |

| **Schmelzeviskosität, 280°C** | | | | | | | | | | | | | | | | |
|---|---|---|---|---|---|---|---|---|---|---|---|---|---|---|---|---|
| eta 200 [l/s] | Pas | 626 | 641 | 597 | 616 | 575 | 670 | 649 | 627 | 590 | 644 | 624 | 561 | 367 | 622 | 353 |
| eta 500 [l/s] | Pas | 508 | 523 | 483 | 508 | 483 | 545 | 527 | 524 | 494 | 523 | 504 | 463 | 311 | 509 | 293 |
| eta 1000 [l/s] | Pas | 391 | 397 | 374 | 393 | 375 | 418 | 407 | 405 | 396 | 403 | 390 | 368 | 250 | 394 | 247 |
| eta 1500 [l/s] | Pas | 319 | 324 | 300 | 320 | 309 | 338 | 329 | 329 | 328 | 329 | 319 | 305 | 217 | 321 | 225 |

| **Schmelzeviskosität, 300°C** | | | | | | | | | | | | | | | | |
|---|---|---|---|---|---|---|---|---|---|---|---|---|---|---|---|---|
| eta 200 [l/s] | Pas | 339 | 328 | 293 | 330 | 295 | 345 | 302 | 324 | 338 | 279 | 320 | 328 | 168 | 313 | 155 |
| eta 500 [l/s] | Pas | 295 | 292 | 264 | 292 | 268 | 307 | 179 | 292 | 302 | 253 | 285 | 284 | 156 | 276 | 152 |
| eta 1000 [l/s] | Pas | 250 | 243 | 225 | 246 | 229 | 245 | 239 | 249 | 260 | 233 | 240 | 223 | 141 | 233 | 134 |
| eta 1500 [l/s] | Pas | 216 | 211 | 196 | 213 | 201 | 215 | 211 | 216 | 227 | 209 | 209 | 195 | 130 | 202 | 120 |

**Tabelle 3: Beispiele 1- 14, YI an 4 mm Plättchen sowie relative Viskositäten von hergestellten Compounds vor und nach 50 h- und 100 h-Kochtest**

| Beispiel-Nr: | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Rezeptur erfindungsgemäß? | | Nein | nein | nein | nein | nein | nein | nein | nein | nein | nein | nein | nein | nein | nein |
| PC1 | % | 95 | 95 | 95 | 95 | 95 | 95 | 95 | 95 | 95 | 95 | 95 | 95 | 95 | 95 |
| PC2 | % | 5,00 | 4,70 | 4,70 | 4,75 | 4,30 | 4,30 | 4,35 | 4,740 | 4,725 | 4,740 | 4,725 | 4,340 | 4,325 | 4,340 |
| PETS | % | - | - | - | - | 0,40 | 0,40 | 0,40 | - | - | - | - | 0,40 | 0,40 | 0,40 |
| TPP | % | - | 0,05 | - | - | 0,05 | - | - | 0,010 | 0,025 | - | - | 0,01.0 | 0,025 | - |
| Trialkylphosphit | % | - | - | 0,05 | - | - | 0,05 | - | - | - | 0,010 | 0,025 | - | - | 0,010 |
| Tinuvin 329 | % | - | 0,25 | 0,25 | 0,25 | 0,25 | 0,25 | 0,25 | 0,25 | 0,25 | 0,25 | 0,25 | 0,25 | 0,25 | 0,25 |
| Hostavin B-Cap | % | | | | | | | | | | | | | | |
| Uvinul 3030 | % | | | | | | | | | | | | | | |
| GMS | % | | | | | | | | | | | | | | |
| Loxiol G32 | % | | | | | | | | | | | | | | |
| | | | | | | | | | | | | | | | |
| **opt. Daten in 4 mm** | | | | | | | | | | | | | | | |
| Y.I. | | 2,81 | 2,00 | 3,39 | 3,23 | 2,15 | 2,99 | 3,52 | 2,68 | 2,47 | 3,45 | 3,50 | 2,63 | 2,25 | 3,16 |
| **Relative Viskosität (Eta** | | | | | | | | | | | | | | | |
| O h, Granulat | | 1,27 | 1,276 | 1,273 | 1,274 | 1,277 | 1,272 | 1,272 | 1,276 | 1,276 | 1,276 | 1,276 | 1,275 | 1,275 | 1,276 |
| Nach 50 h Kochtest | | 1,27 | 1,272 | 1,220 | 1,272 | 1,271 | 1,207 | 1,270 | 1,273 | 1,271 | 1,273 | 1,234 | 1,278 | 1,269 | 1,252 |
| Nach 100 h Kochtest | | 1,27 | 1,272 | 1,185 | 1,270 | 1,266 | 1,168 | 1,264 | 1,271 | 1,271 | 1,269 | 1,206 | 1,269 | 1,269 | 1,242 |
| Δ Eta rel. nach 50 h | | - | -0,004 | -0,053 | -0,002 | -0,006 | -0,065 | -0,002 | -0,003 | -0,005 | -0,003 | -0,042 | 0,003 | -0,006 | -0,024 |
| Δ Eta rel. nach 100h | | - | -0,004 | -0,088 | -0,004 | -0,011 | -0,104 | -0,008_{'} | -0,005 | -0,005 | -0,007 | -0,07 | -0,006 | -0,006 | -0,034 |

**Tabelle 4: Beispiele 15- 28, YI an 4 mm Plättchen sowie relative Viskositäten von hergestellten Compounds vor und nach 50 h- und 100 h-Kochtest**

| Beispiel-Nr: | | 15 | 16 | 17 | 18 | 19 | 20 | 21 | 22 | 23 | 24 | 25 | 26 | 27 | 28 | 29 |
|---|---|---|---|---|---|---|---|---|---|---|---|---|---|---|---|---|
| Rezeptur erfindungsgemäß? | | nein | nein | nein | nein | nein | nein | nein | nein | nein | nein | nein | nein | ja | ja | ja |
| PC1 | % | 95 | 95 | 95 | 95 | 95 | 95 | 95 | 95 | 95 | 95 | 95 | 95 | 95 | 95 | 95 |
| PC2 | % | 4,32 | 4,525 | 3,925 | 4,525 | 3,925 | 4,875 | 4,575 | 4,875 | 4,575 | 4,475 | 4,175 | 4,175 | 4,32 | 4,32 | 4,32 |
| PETS | % | 0,40 | 0,20 | 0,80 | 0,20 | 0,80 | | - | | | 0,40 | 0,40 | 0,40 | | | |
| TPP | % | | 0,025 | 0,025 | | | 0,025 | 0,025 | | | 0,025 | 0,025 | | 0,02 | 0,02 | 0,02 |
| Trialkylphosphit | % | 0,02 | | | 0,025 | 0,025 | | - | 0,025 | 0,025 | | | 0,025 | | | |
| Tinuvin 329 | % | 0,25 | 0,25 | 0,25 | 0,25 | 0,25 | 0,1 | 0,4 | 0,1 | 0,4 | 0,1 | 0,4 | 0,4 | | | |
| Hostavin B-Cap | % | | | | | | | | | | | | | 0,25 | 0,25 | |
| Uvinul 3030 | % | | | | | | | | | | | | | | | 0,25 |
| GMS | % | | | | | | | | | | | | | 0,4 | | 0,4 |
| Loxiol G32 | % | | | | | | | | | | | | | | 0,4 | |
| | | | | | | | | | | | | | | | | |

| **opt. Daten in 4 mm** | | | | | | | | | | | | | | | | |
|---|---|---|---|---|---|---|---|---|---|---|---|---|---|---|---|---|
| Y.I. | | 2,94 | 2,36 | 2,26 | 3,09 | 3,37 | 2,15 | 2,47 | 2,62 | 3,31 | 1,81 | 2,32 | 3,27 | 1,56 | 1,71 | 2,5 |

| **Relative Viskosität (Eta** | | | | | | | | | | | | | | | | |
|---|---|---|---|---|---|---|---|---|---|---|---|---|---|---|---|---|
| O h, Granulat | | 1,27 | 1,277 | 1,275 | 1,276 | 1,275 | 1,278 | 1,275 | 1,276 | 1,272 | 1,275 | 1,275 | 1,274 | 1,27 | 1,27 | 1,27 |
| Nach 50 h Kochtest | | 1,22 | 1,274 | 1,271 | 1,231 | 1,233 | 1,275 | 1,276 | 1,223 | 1,260 | 1,274 | 1,273 | 1,231 | 1,25 | 1,27 | 1,25 |
| Nach 100 h Kochtest | | 1,20 | 1,273 | 1,269 | 1,195 | 1,120 | 1,271 | 1,272 | 1,213 | 1,249 | 1,273 | 1,270 | 1,199 | 1,25 | 1,27 | 1,25 |
| Δ Eta rel. nach 50 h | | - | -0,003 | -0,004 | -0,045 | -0,042 | -0,003 | 0,001 | -0,053 | -0,012 | -0,001 | -0,002 | -0,043 | - | 0,00 | 0,02 |
| Δ Eta rel. nach 100h | | - | -0,004 | -0,006 | -0,081 | -0,155 | -0,007 | - | -0,063 | -0,023 | -0,002 | -0,005 | -0,075 | - | 0,00 | 0,02 |

Wie sich aus der den vorangehenden Tabellen ergibt, weisen die erfindungsgemäßen Zusammensetzungen einen Y.I. von < 2,8 und eine Δ Eta rel. nach 100h < 0,025 auf.

## Patentansprüche

1. Zusammensetzung, enthaltend ein Schmelzepolycarbonat und
a) wenigstens einen UV-Absorber aus der Gruppep p-Phenylen-bis(methylenmalonsäure)tetraethylester und 1,3-Bis[(2-cyano-3,3-diphenylacryloyl)oxy]-2,2-bis[[(2-cyano-3,3-diphenylacryloyl)oxy]methyl]propan,
b) wenigstens ein Phosphin, und
c) optional einen aliphatischen Carbonsäureester,
wobei die Phosphine Verbindungen der Formel (I) sind: 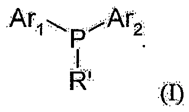
wobei Ar₁ und Ar₂ gleiche oder unterschiedliche unsubstituierte oder substituierte Arylreste sind und
R' ein unsubstituierter oder substituierter Arylrest oder einer der folgenden Reste (Ia) bis (Ih) ist 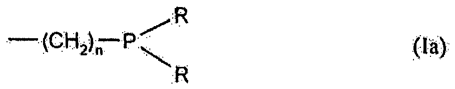 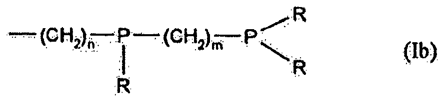 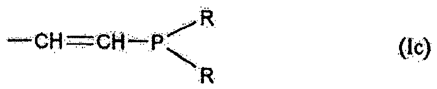 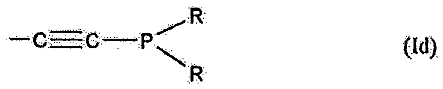 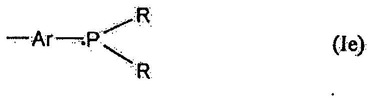 mit Ar = R
(C₆-C₁₄-Aryl-Rest) 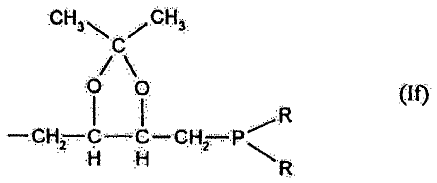 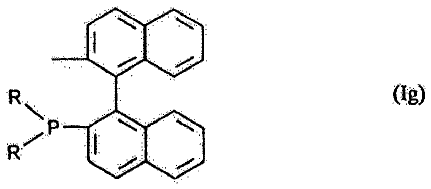 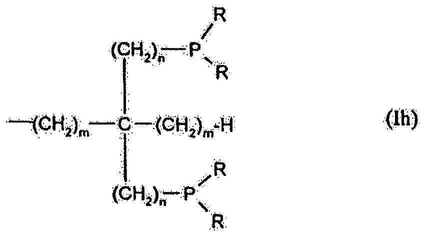 in denen R ein unsubstituierter oder substituierter C₆-C₁₄-Aryl-Rest ist und n und m jeweils unabhängig voneinander eine ganze Zahl von 1 bis 7 sind und wobei die H-Atome der Reste (Ia) bis (Ic) noch durch Substituenten ersetzt sein können und wobei
R' noch 4-Phenyl-phenyl oder α-Naphthyl sein kann, wenn Ar₁ und Ar₂ in Formel (I) jeweils ebenfalls 4-Phenyl-phenyl oder α -Naphthyl sind, und wobei die 4-Phenyl-phenyl- und die α-Naphthyl-Reste substituiert sein können.

2. Zusammensetzung nach Anspruch 1, bei der das Schmelzepolycarbonat ein Schmelzepolycarbonat der Formel (IV) 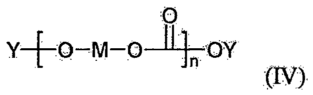 ist, wobei die eckige Klammer sich wiederholende Struktureinheiten bezeichnet,
M gleich Ar₃ oder eine multifunktionelle Verbindung A, B, C sowie Verbindung D ist, wobei Ar₃ eine Verbindung sein kann, die durch Formel (VIII) oder (IX) dargestellt wird, 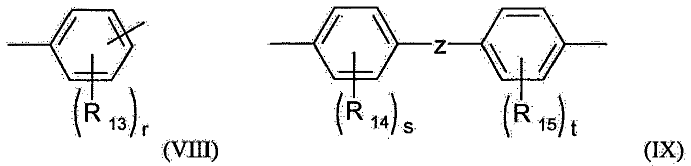 wobei
Z C₁ bis C₈-Alkyliden oder C₅ bis C₁₂-Cycloalkyliden, S, SO₂ oder eine Einfachbindung ist,
n eine natürliche Zahl ist,
R₁₃, R₁₄, R₁₅ unabhängig voneinander ein substituierter oder unsubstituierter C₁ - C₁₈ Alkylrest ist, bevorzugt ein substituiertes oder unsubstituiertes Phenyl, Methyl, Propyl, Ethyl, Butyl, Cl oder Br ist und n für 0, 1 oder 2 steht,
r, s, t unabhängig voneinander 0, 1, 2 oder 3 sein kann,
wobei X = Y oder -[MOCOO]ₙ-Y ist,
wobei die multifunktionelle Verbindung A eine Verbindung der Formel 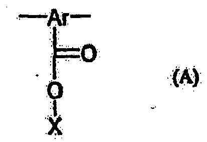 ist, wobei die multifunktionelle Verbindung B eine Verbindung der Formel 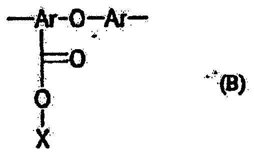 ist, wobei die multifunktionelle Verbindung C eine Verbindung der Formel 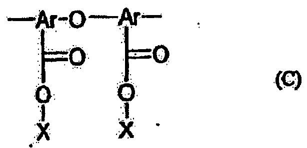 ist, wobei Verbindung D eine Verbindung der Formel 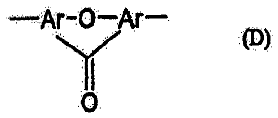 ist, und die Summe von multifunktionellen Verbindungen A, B, C und D ≥ 5 mg/kg ist, wobei Y = H oder eine Verbindung der Formel (X) 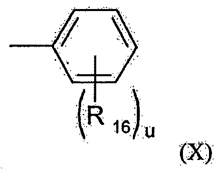 ist, wobei
R₁₆ gleich oder verschieden H, C₁ bis C₂₀-Alkyl, C₆H₅ oder C(CH₃)₂C₆H₅, und
u 0, 1, 2 oder 3 sein kann,
wobei M und Y die oben angegebene Bedeutung haben.

3. Zusammensetzung nach einem der Ansprüche 1 bis 2, **dadurch gekennzeichnet, dass** die verwendeten UV-Absorber in Mengen von 0,01 bis 15 Gew.-% bezogen auf das Gesamtgewicht der Zusammensetzung eingesetzt werden.

4. Zusammensetzung nach einem der Ansprüche 1 bis 2, **dadurch gekennzeichnet, dass** die verwendeten UV-Absorber in Mengen von 0,1 bis 0,4 Gew.-% bezogen auf das Gesamtgewicht der Zusammensetzung eingesetzt werden.

5. Zusammensetzung nach einem der Ansprüche 1 bis 4, **dadurch gekennzeichnet, dass** die verwendeten Phosphine in Mengen von 10 bis 2000 mg/kg bezogen auf das Gesamtgewicht der Zusammensetzung eingesetzt werden.

6. Zusammensetzung nach einem der Ansprüche 1 bis 4, **dadurch gekennzeichnet, dass** die verwendeten Phosphine in Mengen von 100 bis 500 mg/kg bezogen auf das Gesamtgewicht der Zusammensetzung eingesetzt werden.

7. Zusammensetzung nach einem der Ansprüche 1 bis 6, **dadurch gekennzeichnet, dass** das Phosphin Triphenylphosphin ist.

8. Zusammensetzung nach einem der Ansprüche 1-7, enthaltend weiterhin wenigstens ein Alkylphosphat
der allgemeinen Formel (II): 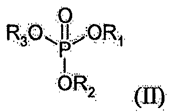 wobei R₁ bis R₃ H, gleiche oder unterschiedliche lineare, verzweigte oder zyklische Alkylreste sein können.

9. Zusammensetzung nach einem der Ansprüche 1 bis 8, enthaltend weiterhin aliphatische Carbonsäureester der allgemeinen Formel (III):
(R₄-CO-O)ₒ-R₅-(OH)ₚ mit o = 1 bis 4 und p = 3 bis 0 (III),
wobei R₄ ein aliphatischer gesättigter oder ungesättigter, linearer, cyclischer oder verzweigter Alkylrest ist und R₅ ein Alkylenrest eines 1- bis 4-wertigen aliphatischen Alkohols R₅-(OH)ₒ₊ₚ ist.

10. Zusammensetzung nach einem der Ansprüche 8 oder 9, **dadurch gekennzeichnet, dass** die verwendeten Alkylphosphate in Mengen von 0,5 bis 500 mg/kg bezogen auf das Gesamtgewicht der Zusammensetzung eingesetzt werden.

11. Zusammensetzung nach einem der vorhergehenden Ansprüche, **dadurch gekennzeichnet, dass** die verwendeten Carbonsäureester in Mengen von 0 bis 12000 mg/kg bezogen auf das Gesamtgewicht der Zusammensetzung eingesetzt werden.

12. Zusammensetzung nach einem der Ansprüche 1 bis 11, **dadurch gekennzeichnet, dass** die verwendeten Carbonsäureester in Mengen von 2000 bis 8000 mg/kg bezogen auf das Gesamtgewicht der Zusammensetzung eingesetzt werden.

13. Zusammensetzung nach einem der vorhergehenden Ansprüche, **dadurch gekennzeichnet, dass** der YI-Wen des Materials nach Verspritzen kleiner oder gleich 2,80 und die Abnahme der relativen Viskosität gemessen in einem Ubbelhode Viskosimeter in Methylenchlorid (0,5 g Polycarbonat/l) bei 25°C nach 50 h Kochtest in Wasser kleiner 0,023 und nach 100 h kleiner 0,025 ist, wobei der YI-Wert an Normprüfkörpern gemäß ASTM E 313 bestimmt wird.

14. Formkörper, enthaltend eine Zusammensetzung nach einem der Ansprüche 1 bis 13.

## Claims

1. Composition comprising a melt polycarbonate and
a) at least one UV absorber from the group of tetraethyl p-phenylenebis[methylenemalonate] and 1,3-bis[(2-cyano-3,3-diphenylacryloyl)oxy]-2,2-bis[[(2-cyano-3,3-diphenylacryloyl)oxy]methyl]propane,
b) at least one phosphine, and
c) optionally an aliphatic carboxylic acid ester, wherein the phosphines are compounds of formula (I): 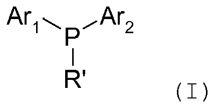
wherein Ar₁ and Ar₂ are identical or different unsubstituted or substituted aryl radicals and
R' is an unsubstituted or substituted aryl radical or one of the following radicals (Ia) to (Ih) 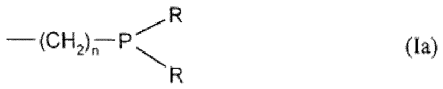 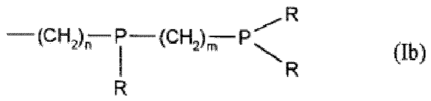 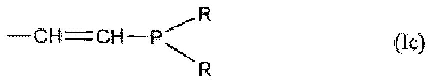 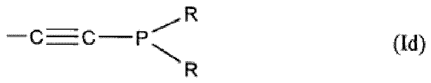 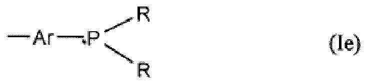 wherein Ar = R
(C₆-C₁₄-aryl radical) 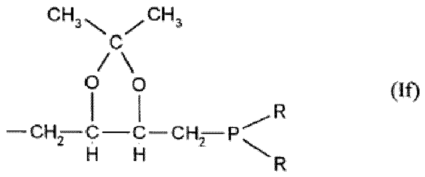 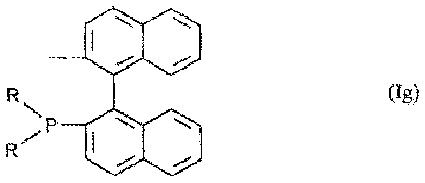 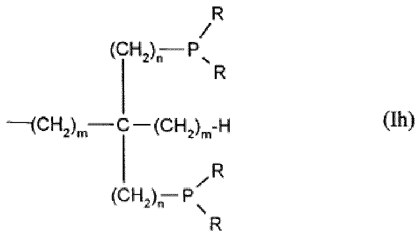 in which R is an unsubstituted or substituted C₆-C₁₄-aryl radical and n and m each independently of the other is an integer from 1 to 7, and wherein the hydrogen atoms of radicals (Ia) to (Ic) can also be replaced by substituents, and wherein
R' can also be 4-phenyl-phenyl or α-naphthyl when Ar₁ and Ar₂ in formula (I) are each likewise 4-phenyl-phenyl or α-naphthyl, and wherein the 4-phenyl-phenyl and α-naphthyl radicals can be substituted.

2. Composition according to claim 1, in which the melt polycarbonate is a melt polycarbonate of formula (IV) 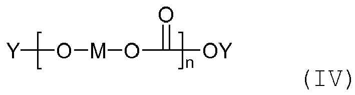
wherein the square brackets denote structural repeating units,
M is Ar₃ or a multifunctional compound A, B, C and compound D,
wherein Ar₃ can be a compound represented by formula (VIII) or (IX) 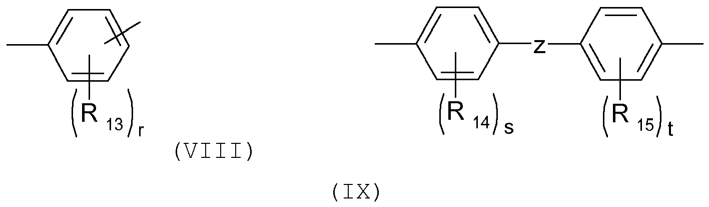 wherein
Z is C₁- to C₈-alkylidene or C₅- to C₁₂-cycloalkylidene, S, SO₂ or a single bond,
n is a natural number,
R₁₃, R₁₄, R₁₅ independently of one another are a substituted or unsubstituted C₁-C₁₈-alkyl radical, preferably a substituted or unsubstituted phenyl, methyl, propyl, ethyl, butyl, Cl or Br, and n represents 0, 1 or 2,
r, s, t independently of one another can be 0, 1, 2 or 3,
wherein X is Y or -[MOCOO]ₙ-Y,
wherein the multifunctional compound A is a compound of the formula 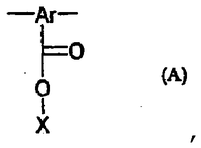 wherein the multifunctional compound B is a compound of the formula 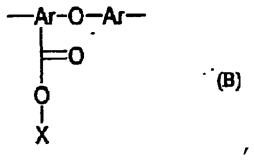 wherein the multifunctional compound C is a compound of the formula 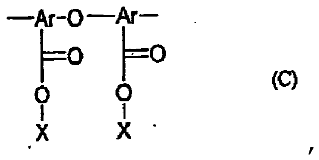 wherein compound D is a compound of the formula 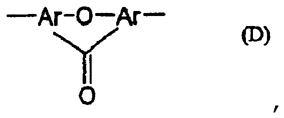 and the sum of multifunctional compounds A, B, C and D is ≥ 5 mg/kg,
wherein Y is H or a compound of formula (X) 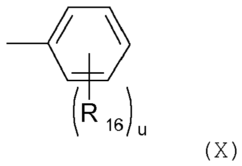 wherein
the radicals R₁₆, which are identical or different, can be H, C₁- to C₂₀-alkyl, C₆H₅ or C(CH₃)₂C₆H₅, and
u can be 0, 1, 2 or 3,
wherein M and Y have the meaning given above.

3. Composition according to either of claims 1 and 2, **characterised in that** the UV absorbers that are used are employed in amounts of from 0.01 to 15 wt.%, based on the total weight of the composition.

4. Composition according to either of claims 1 and 2, **characterised in that** the UV absorbers that are used are employed in amounts of from 0.1 to 0.4 wt.%, based on the total weight of the composition.

5. Composition according to any one of claims 1 to 4, **characterised in that** the phosphines that are used are employed in amounts of from 10 to 2000 mg/kg, based on the total weight of the composition.

6. Composition according to any one of claims 1 to 4, **characterised in that** the phosphines that are used are employed in amounts of from 100 to 500 mg/kg, based on the total weight of the composition.

7. Composition according to any one of claims 1 to 6, **characterised in that** the phosphine is triphenylphosphine.

8. Composition according to any one of claims 1 to 7, further comprising at least one alkyl phosphate of the general formula (II): 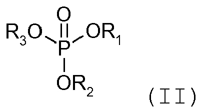 wherein R₁ to R₃ can be H, identical or different linear, branched or cyclic alkyl radicals.

9. Composition according to any one of claims 1 to 8, further comprising aliphatic carboxylic acid esters of the general formula (III):
(R₄-CO-O)ₒ,-R₅-(OH)ₚ wherein o = from 1 to 4 and p = from 3 to 0 (III)
wherein R₄ is an aliphatic saturated or unsaturated, linear, cyclic or branched alkyl radical and R₅ is an alkylene radical of a mono- to tetra-hydric aliphatic alcohol R₅-(OH)ₒ₊ₚ.

10. Composition according to either of claims 8 and 9, **characterised in that** the alkyl phosphates that are used are employed in amounts of from 0.5 to 500 mg/kg, based on the total weight of the composition.

11. Composition according to any one of the preceding claims, **characterised in that** the carboxylic acid esters that are used are employed in amounts of from 0 to 12,000 mg/kg, based on the total weight of the composition.

12. Composition according to any one of claims 1 to 11, **characterised in that** the carboxylic acid esters that are used are employed in amounts of from 2000 to 8000 mg/kg, based on the total weight of the composition.

13. Composition according to any one of the preceding claims, **characterised in that** the YI value of the material after injection moulding is less than or equal to 2.80 and the fall in relative viscosity measured in an Ubbelohde viscometer in methylene chloride (0.5 g of polycarbonate/l) at 25°C is less than 0.023 after a 50-hour boiling test in water and less than 0.025 after 100 hours, where the YI value is determined on standard test specimens in accordance with ASTM E313.

14. Moulded bodies containing a composition according to any one of claims 1 to 13.

## Revendications

1. Composition, contenant un polycarbonate en masse fondue et
a) au moins un absorbant des UV du groupe formé par le p-phénylène-(ester tétraéthylique de bis(acide méthylènemalonique) et le 1,3-bis[(2-cyano-3,3-diphénylacryloyl)oxy]-2,2-bis[[(2-cyano-3,3-diphénylacryloyl)oxy]méthyl]propane,
b) au moins une phosphine et
c) éventuellement un ester aliphatique d'un acide
carboxylique
les phosphines étant des composés de formule (I) : 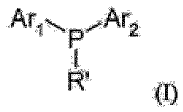 où
Ar₁ et Ar₂ représentent des radicaux aryle identiques ou différents, non substitués ou substitués et
R' représente un radical aryle non substitué ou substitué ou un des radicaux suivants (Ia) à (Ih) 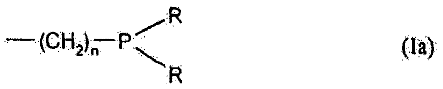 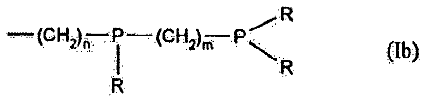 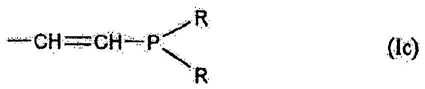 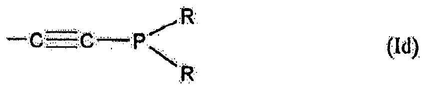 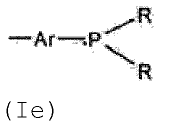
avec Ar = R (radical C₆-C₁₄-aryle) 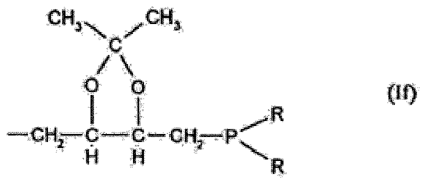 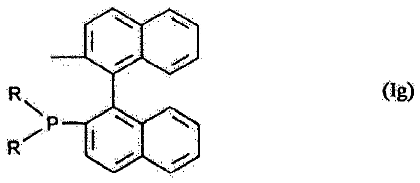 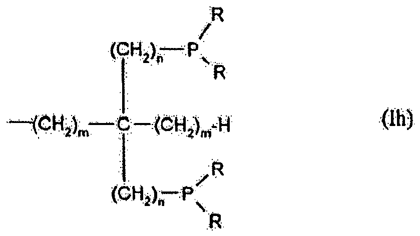 dans lesquels R représente un radical C₆-C₁₄-aryle non substitué ou substitué et n et m représentent, à chaque fois indépendamment l'un de l'autre, un nombre entier de 1 à 7 et les atomes de H des radicaux (Ia) à (Ic) pouvant encore être remplacés par des substituants et
R' peut encore représenter 4-phénylphényle ou α-naphtyle, lorsque Ar₁ et Ar₂ dans la formule (I) représentent également 4-phénylphényle ou α-naphtyle et les radicaux 4-phénylphényle et α-naphtyle pouvant être substitués.

2. Composition selon la revendication 1, dans laquelle le polycarbonate en masse fondue est un polycarbonate en masse fondue de formule (IV) 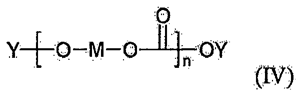 les crochets désignant des unités de structure récurrentes,
M représentant Ar₃ ou un composé multifonctionnel A, B, C ainsi qu'un composé D,
Ar₃ pouvant être un composé représenté par la formule (VIII) ou (IX), 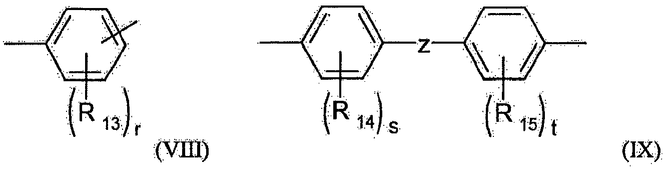 où
Z représente C₁-C₈-alkylidène ou C₅-C₁₂-cycloalkylidène, S, SO₂ ou une simple liaison,
n vaut un nombre naturel, et
R₁₃, R₁₄, R₁₅ représentent, indépendamment les uns des autres, un radical C₁-C₁₈-alkyle substitué ou non substitué, de préférence un radical phényle, méthyle, propyle, éthyle, butyle, substitué ou non substitué, Cl ou Br et n vaut 0, 1 ou 2,
r, s, t indépendamment les uns des autres, peuvent valoir 0, 1, 2 ou 3 ;
où X = Y ou -[MOCOO]ₙ-Y,
le composé multifonctionnel A représentant un composé de formule 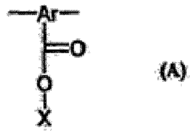 le composé multifonctionnel B représentant un composé de formule 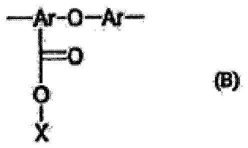 le composé multifonctionnel C représentant un composé de formule 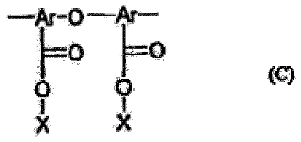 le composé D représentant un composé de formule 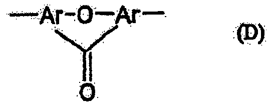 et la somme des composés multifonctionnels A, B, C et D étant ≥ 5 mg/kg, Y = H ou un composé de formule (X) 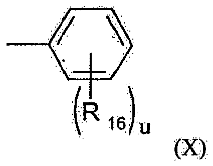 où
R₁₆ est identique ou différent et peut représenter H, C₁-C₂₀-alkyle, C₆H₅ ou C(CH₃)₂C₆H₅, et
u peut valoir 0, 1, 2 ou 3,
M et Y présentant la signification susmentionnée.

3. Composition selon l'une quelconque des revendications 1 à 2, **caractérisée en ce que** les absorbants des UV utilisés sont utilisés en des quantités de 0,01 à 15% en poids par rapport au poids total de la composition.

4. Composition selon l'une quelconque des revendications 1 à 2, **caractérisée en ce que** les absorbants des UV utilisés sont utilisés en des quantités de 0,1 à 0,4% en poids par rapport au poids total de la composition.

5. Composition selon l'une quelconque des revendications 1 à 4, **caractérisée en ce que** les phosphines utilisées sont utilisées en des quantités de 10 à 2000 mg/kg par rapport au poids total de la composition.

6. Composition selon l'une quelconque des revendications 1 à 4, **caractérisée en ce que** les phosphines utilisées sont utilisées en des quantités de 100 à 500 mg/kg par rapport au poids total de la composition.

7. Composition selon l'une quelconque des revendications 1 à 6, **caractérisée en ce que** la phosphine est la triphénylphosphine.

8. Composition selon l'une quelconque des revendications 1 à 7, contenant en outre au moins un phosphate d'alkyle de formule générale (II) : 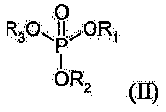 dans laquelle R₁ à R₃ peuvent représenter H, des radicaux alkyle identiques ou différents, linéaires, ramifiés ou cycliques.

9. Composition selon l'une quelconque des revendications 1 à 8, contenant en outre des esters d'acides carboxyliques aliphatiques de formule générale (III) :
(R₄-CO-O)ₒ-R₅-(OH)ₚ avec o = 1 à 4 et p = 3 à 0 (III),
R₄ représentant un radical alkyle aliphatique, saturé ou insaturé, linéaire, cyclique ou ramifié et R₅ représentant un radical alkylène d'un alcool aliphatique monovalent à tétravalent R₅-(OH)ₒ₊ₚ.

10. Composition selon l'une quelconque des revendications 8 ou 9, **caractérisée en ce que** les phosphates d'alkyle utilisés sont utilisés en des quantités de 0,5 à 500 mg/kg par rapport au poids total de la composition.

11. Composition selon l'une quelconque des revendications précédentes, **caractérisée en ce que** les esters d'acides carboxyliques utilisés sont utilisés en des quantités de 0 à 12 000 mg/kg par rapport au poids total de la composition.

12. Composition selon l'une quelconque des revendications 1 à 11, **caractérisée en ce que** les esters d'acides carboxyliques utilisés sont utilisés en des quantités de 2000 à 8000 mg/kg par rapport au poids total de la composition.

13. Composition selon l'une quelconque des revendications précédentes, **caractérisée en ce que** la valeur YI du matériau après la pulvérisation est inférieure ou égale à 2,80 et la diminution de la viscosité relative, mesurée dans un viscosimètre d'Ubbelhode dans du chlorure de méthylène (0,5 g de polycarbonate/l) à 25°C après un test d'ébullition dans l'eau de 50 heures, est inférieure à 0,023 et, après 100 heures, est inférieure à 0,025, la valeur YI étant déterminée sur des éprouvettes normalisées selon la norme ASTM E 313.

14. Corps façonné contenant une composition selon l'une quelconque des revendications 1 à 13.
